Europäisches Patentamt

European Patent Office

Office européen des brevets

(19)

(11) Veröffentlichungsnummer : **0 308 615 B1**

(12) **EUROPÄISCHE PATENTSCHRIFT**

(45) Veröffentlichungstag der Patentschrift :
**22.05.91 Patentblatt 91/21**

(51) Int. Cl.⁵ : **B60P 1/34,** B60P 1/64

(21) Anmeldenummer : **88111775.8**

(22) Anmeldetag : **21.07.88**

(54) Verfahren und Vorrichtung zum Wechsel von Mulden bei Wechselmuldenkippern.

(30) Priorität : **19.09.87 DE 3731599**

(43) Veröffentlichungstag der Anmeldung :
**29.03.89 Patentblatt 89/13**

(45) Bekanntmachung des Hinweises auf die
Patenterteilung :
**22.05.91 Patentblatt 91/21**

(84) Benannte Vertragsstaaten :
**AT CH DE FR GB IT LI SE**

(56) Entgegenhaltungen :
**CH-A- 609 922**
**GB-A- 1 234 630**

(73) Patentinhaber : **MAN Gutehoffnungshütte**
**Aktiengesellschaft**
**Bahnhofstrasse 66 Postfach 11 02 40**
**W-4200 Oberhausen 11 (DE)**

(72) Erfinder : **Klusmann, Gerhard**
**Kleestrasse 8**
**W-4200 Oberhausen 11 (DE)**

EP 0 308 615 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren und eine Vorrichtung zum Wechsel von Mulden bei Wechselmuldenkippern, bei dem eine leere Mulde unter Zuhilfenahme von Hubarmen von einem Rahmen eines Transportfahrzeuges abgesetzt wird.

Es ist allgemein bekannt, den Wechsel von Behältern, beispielsweise Schuttcontainern, durch schwenkbare Hubarme vorzunehmen. Die Behälter werden dabei mittels Ketten in die Hubarme eingehängt. Die Hubarme ihrerseits sind im Rahmen eines Transportfahrzeuges schwenkbar gelagert und können durch hydraulische Kolben-Zylinder-Einheiten verschwenkt werden. Eine solche Einrichtung hat den Nachteil, daß die Behälter beim Wechsel nebeneinander abgestellt werden müssen.

Es ist ferner bekannt, Behälter, wie Schuttcontainer, dadurch zu wechseln, daß diese mittels Seilzuges auf eine Rampe aufgezogen werden, welche schwenkbar mit dem Transportfahrzeug verbunden ist. Diesem System haftet ebenfalls der Mangel an, daß die Container nebeneinander abgesetzt werden müssen. Es ist unmöglich beim Behälterwechsel, den einen Behälter an die Stelle des anderen zu setzen.

Der Erfindung liegt die Aufgabe zugrunde, den Behälterwechsel bei seitlich begrenzten Raumverhältnissen, wie sie vornehmlich im Untertagebau und beim Tunnelbau anzutreffen sind, so vorzunehmen, daß der abzusetzende Behälter anstelle der aufzunehmenden Behälter tritt bzw. umgekehrt.

Gelöst wird diese Aufgabe nach dem erfindungsgemäßen Verfahren durch folgende Verfahrensschritte :

a) die leere Mulde wird am Ort eines Wechselvorganges von einem Rahmen des Transportfahrzeuges zunächst abgehoben und in ihrer obersten Stellung arretiert,

b) während die leere Mulde in der obersten Stellung arretiert ist, wird eine volle Mulde auf den Rahmen des Transportfahrzeuges gezogen und in Transportstellung gebracht,

c) die leere Mulde wird aus ihrer obersten Stellung abgesetzt und anstelle der vollen Mulde abgesetzt.

Während bei bekannten Wechselverfahren der Absetz- und der Aufnahmevorgang zeitlich gesehen nacheinander ablaufen, ist es erfindungsgemäß möglich, beide Vorgänge quasi kontinuierlich vorzunehmen. Die Mulden werden nicht nebeneinander gelagert, wozu vielfach kein Platz vorhanden ist, sondern die eine Mulde tritt beim Wechsel an die Stelle der anderen Mulde, so daß seitlich gesehen nur wenig mehr als die Breite des Transportfahrzeuges notwendig ist, jedoch erheblich weniger als die Breite zweier Mulden. Die für die Bewegung der Hubarme erforderliche Höhe ist durchweg vorhanden.

Die erfindungsgemäße Vorrichtung zur Durchführung des Verfahrens nach Anspruch 1 zeichnet sich nach Anspruch 2 dadurch aus, daß das Transportfahrzeug einen u-förmigen Rahmen aufweist, der die Mulde für das Transportgut aufnimmt, daß in beiden Wangen des Rahmens je ein Hubarm schwenkbar gelagert ist, wobei die Schwenkbewegung durch je eine hydraulische Antriebseinrichtung bewerkstelligt wird, welche zwischen Rahmen und Hubarm angeordnet ist und zum Aufziehen der vollen Mulde ein Seilzug oder eine geführte Aufziehvorrichtung vorgesehen ist, welche durch einen Hydraulikmotor betätigbar ist, und daß die Wangen des Rahmens eine schräge Anlauffläche aufweisen und die Oberseite des Rahmens zugleich als Lauffläche ausgebildet ist, und daß jede Mulde im Bereich eines oberen Randes Mittel zum Tragen und Führen auf dem Rahmen aufweist.

Durch die Kombination der an sich bekannten Hubarme zum Aufnehmen bzw. Absenken der Mulden mit einem für sich gesehen bekannten Seilzug zum Aufzug der Mulden auf den Rahmen des Transportfahrzeuges wird erreicht, daß eine leere Mulde auf denselben Platz abgesetzt werden kann, den vorher die aufzunehmende volle Mulde eingenommen hat. Dadurch kann der Muldenwechsel überall dort vorgenommen werden, wo die Verhältnisse das Absetzen zweier Mulden nebeneinander nicht zulassen, wie z.B. im Untertagebau oder bei Tunnelbauten. Durch die erfindungsgemäße Vorrichtung wird ein quasi kontinuierlicher Transportablauf ermöglicht. Das Transportfahrzeug setzt vor Ort eine leere Mulde ab und nimmt gleichzeitig eine volle Mulde auf. Während des Abtransportes der vollen Mulde kann die vor Ort stehende leere Mulde beladen werden und wird vom zurückkehrenden oder nächstfolgenden Fahrzeug aufgenommen.

Weitere vorteilhafte Ausbildungen konstruktiver Details der Vorrichtung nach Anspruch 2 können den Unteransprüchen 3 bis 7 entnommen werden.

Ein Ablaufschema des Verfahrens und ein Ausführungsbeispiel der erfindungsgemäßen Vorrichtung ist in Zeichnungen dargestellt. Es zeigen :

Fig. 1 ein Transportfahrzeug mit leerer Mulde und eine volle Mulde, bereit zur Aufnahme,

Fig. 2 die leere Mulde ist angehoben und die volle Mulde in der Phase des Aufziehens auf das Transportfahrzeug,

Fig. 3 die volle Mulde im aufgezogenen Zustand in Transportstellung,

Fig. 4 die leere Mulde nach Beendigung des Absetzvorganges,

Fig. 5 das Transportfahrzeug mit voller Mulde im gekippten Zustand,

Fig. 6 eine Seitenansicht des Transportfahrzeuges mit Mulde in Transportstellung,

Fig. 7 eine Draufsicht auf das Transportfahrzeug nach Fig. 6,

Fig. 8 einen Schnitt VIII-VIII,

Fig. 9 eine Seitenansicht des Transportfahrzeuges mit Mulde in Kippstellung.

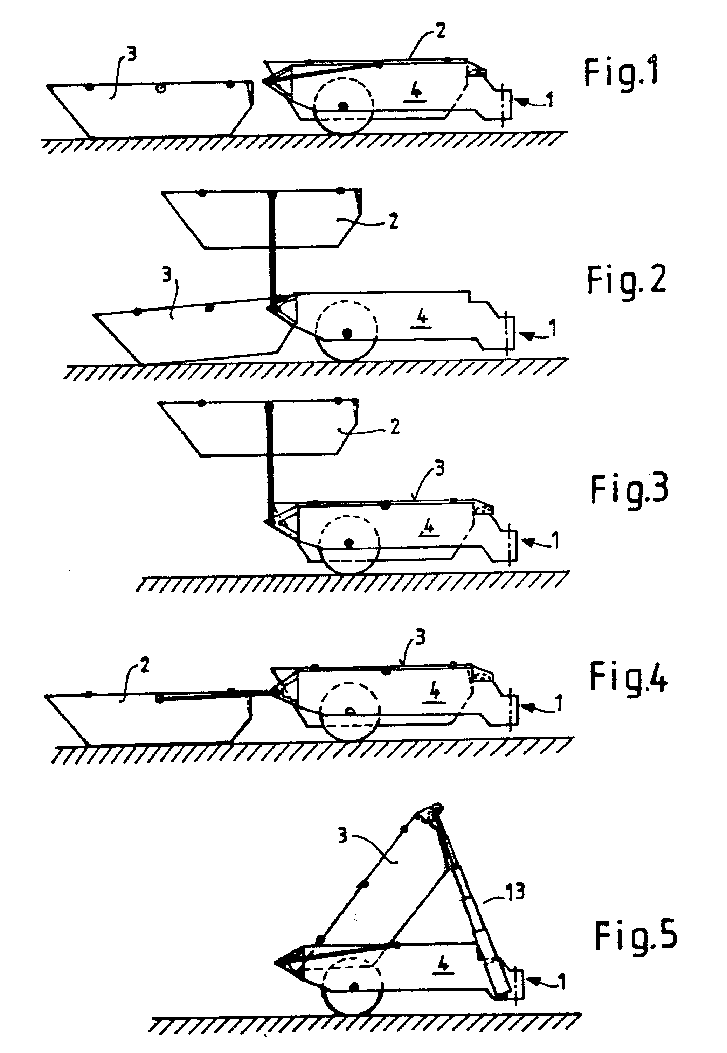

Ein Verfahren zum Absetzen und Aufnehmen von Mulden, insbesondere im Untertagebau, ist als Ablaufschema in den Figuren 1 bis 4 dargestellt.

Figur 1 zeigt ein Transportfahrzeug (1), welches mit einer leeren Mulde (2) beladen ist. Vor Ort soll eine volle Mulde (3) aufgenommen werden und die leere Mulde (2) an deren Stelle abgesetzt werden.

Zu diesem Zweck wird nach Figur 2 zunächst die leere Mulde (2) bis zu deren oberster Stellung angehoben und in dieser Position arretiert.

Anschließend wird die volle Mulde (3) durch eine hier nicht näher dargestellte Zugvorrichtung, z.B. Seilzug, auf einen Rahmen (4) aufgezogen.

Figur 3 zeigt die volle Mulde (3) in Transportstellung auf dem Rahmen (4) des Transportfahrzeuges (1). Die leere Mulde (2) befindet sich noch in oberster Lage.

Nachdem die volle Mulde (3) in Transportstellung ist, kann die leere Mulde (2), wie es Figur 4 zeigt, endgültig abgesetzt werden und nimmt die Stelle der vollen Mulde (3) ein.

Zum Muldenwechsel ist somit nur noch die Breite des Transportfahrzeuges (1) maßgebend, welches nur geringfügig breiter ist als die Mulden (2) bzw. (3), da die Mulden nur gegeneinander ausgetauscht werden und nicht mehr wie bisher üblich nebeneinander abgestellt werden müssen.

Nach der Aufnahme der vollen Mulde (3) vor Ort fährt das Transportfahrzeug (1) zu einem Entladeort, wo es nach Figur 5 durch Kippen der Mulde (3) mittels eines hydraulischen Hubzylinders (13) sein Transportgut entlädt.

Das Transportfahrzeug kann umgehend vor Ort zurückkehren und dort ohne Verzögerung eine neue Mulde (3) aufnehmen (Figur 1), womit sich der Verfahrensablauf wiederholt, wie er in den Figuren 1 bis 5 dargestellt ist.

Während nach dem bisherigen Stand der Technik bei seitlich beengten Verhältnissen, die das Abstellen zweier Mulden nebeneinander nicht erlaubten, ein Fahrzeug mit Wechselmulde nicht eingesetzt werden konnte und das Beladen einer Mulde erst nach der Rückkehr des Transportfahrzeuges mit der leeren Mulde erfolgen konnte, ist es nach dem erfindungsgemäßen Verfahren möglich, die Zeit während des Abtransportes der vollen Mulde für die Beladung der vor Ort abgestellten leeren Mulde zu nutzen, so daß kaum nutzlose Standzeiten des Transportfahrzeuges (1) auftreten.

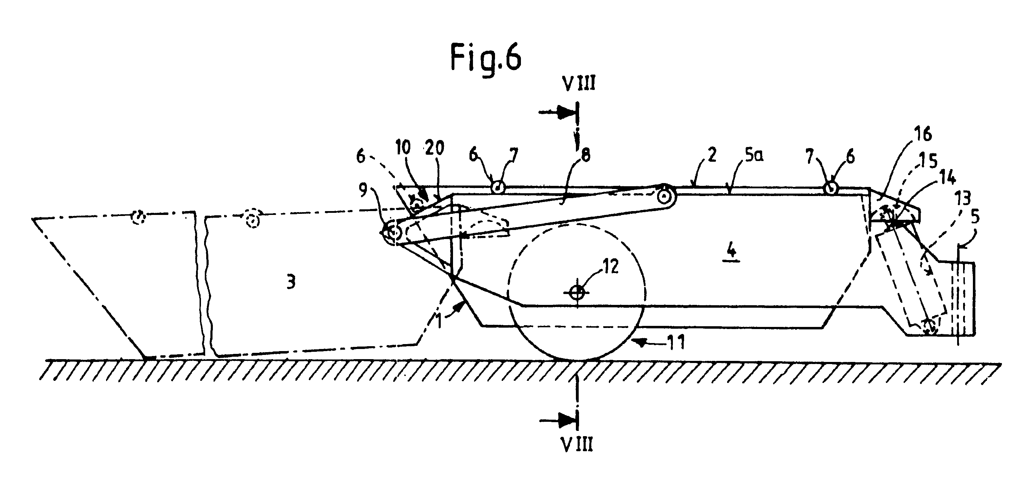

Ein Ausführungsbeispiel einer Vorrichtung zur Durchführung des erfindungsgemäßen Verfahrens ist in den Figuren 6 bis 9 dargestellt.

Figur 6 zeigt das Transportfahrzeug (1) in Seitenansicht. Auf die Darstellung eines über ein Knickgelenk (5) mit dem Transportfahrzeug (1) verbundenen Antriebsteiles wurde verzichtet.

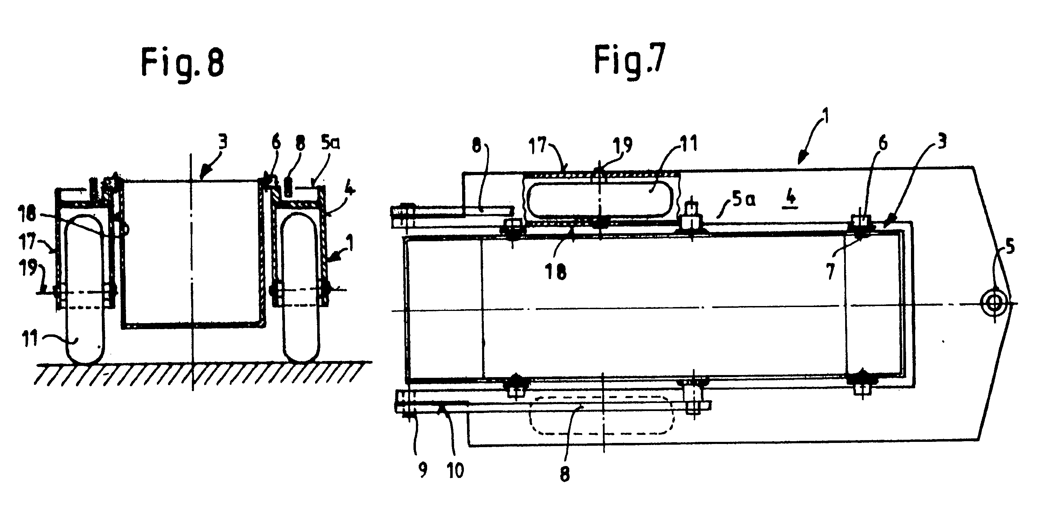

Das Transportfahrzeug (1) wird aus einem Rahmen (4) gebildet, welcher im Querschnitt gesehen u-förmig ausgebildet ist (Figur 8). Die Oberseite des Rahmens (4) kann als Laufläche (5a) ausgebildet sein, auf denen Rollen (6) geführt sind, welche über Achsen (7) mit der Mulde (2) fest verbunden sind.

Es versteht sich, daß anstelle der Rollen (6) auch Gleitstücke verwendet werden können.

Während des Transportes ist vorgesehen, daß die Mulde (2) im Rahmen (4) aufsitzt, um die Rollen (6) bzw. Gleitstücke von der Gewichtskraft der Mulde (2) zu entlasten.

Zum Schwenken der Mulde (3) ist diese in ihrem Schwerpunkt in einem Hubarm (8) aufgehängt, welcher um ein Gelenk (9) Drehbewegungen ausführen kann. Die Verbindung von Hubarm (8) und Mulde (3) ist lösbar, beispielsweise durch einen Bolzen, um den Hubarm (8) nach dem Absetzen der leeren Mulde (2) von dieser zu lösen. Das Gelenk (9) ist dabei in einer Wange (10) des Rahmens (4) angeordnet. Zum Schwenken des Hubarmes (8) ist eine nicht dargestellte hydraulische Antriebseinrichtung vorgesehen, beispielsweise ein Hydraulikmotor mit Zahnsegment oder dergleichen.

Im Rahmen (4) ist ein Rad (11) gelagert, dessen Drehachse (12) im Rahmen (4) gelagert ist (siehe auch Figur 8).

Da die Mulde (3) zum Entleeren des Transportfahrzeuges gekippt werden soll, kann die Rolle (6), welche dem Gelenk (9) benachbart ist, blockiert werden und ein im Rahmen (4) in der Längsmittelebene drehbar gelagerter mehrteiliger Hubzylinder (13) schwenkt die Mulde (3) um die Achse (7) der Rolle (6). Ein Kolben (14) des Hubzylinders (13) greift dabei über eine ballig geformte Auflage (15) an einer mit der Mulde (2) fest verbundenen Nase (16) an. Das Aufziehen einer bladenen Mulde (3) auf eine Anlauffläche (20) der Wange (10) des Rahmens (4) ist auf der linken Seite angedeutet.

Das Aufziehen wird durch einen nicht angedeuteten Seilzug bewerkstelligt, der mit einer Hydraulikwinde betätigt werden kann. Die Rollen (6) der Mulde (3) werden dabei an der Anlauffläche (20) hochgeführt, wodurch die Mulde (3) angehoben wird und auf den Rahmen (4) gezogen wird.

Eine Draufsicht aus das Transportfahrzeug (1) ist in Figur 7 dargestellt. Der Rahmen (4) des Transportfahrzeuges (1) ist über das Knickgelenk (5) mit dem nicht dargestellten Antriebsteil verbunden. Die Mulde (3) ist mittels der Achsen (7) und der Rollen (6) auf der Laufläche (5a) des Rahmens (4) aufgelagert. In ihrem Schwerpunkt ist die Mulde (3) in Hubarmen (8) eingehängt. Diese sind im Gelenk (9) in den Wangen (10) des Rahmens (4) schwenkbar gelagert. Das Transportfahrzeug (1) läuft auf Rädern (11), die in den beiden senkrechten Wänden (17) und (18) auf einer durchgehenden Radachse (19) gelagert sind.

Ein Querschnitt VIII-VIII durch das Transportfahrzeug (1) ist in Figur 8 gezeigt. Im u-förmigen Rahmen (4) sind die Räder (11) auf durchgehenden Radachsen (19) gelagert, die in den senkrechten Wänden (17) und (18) des Rahmens (4) befestigt sind. Die Mulde (3) wird vom Rahmen (4) aufgenommen, wobei sie auf Rollen verfahrbar ist, welche auf der Oberseite des Rahmens (4) laufen, die als Lauffläche (5a) ausgebildet ist. Die Hubarme (8) sind seitlich der Mulde (3) angeordnet, wobei die Mulde (3) in ihrem Schwerpunkt in die Hubarme (8) eingehängt ist.

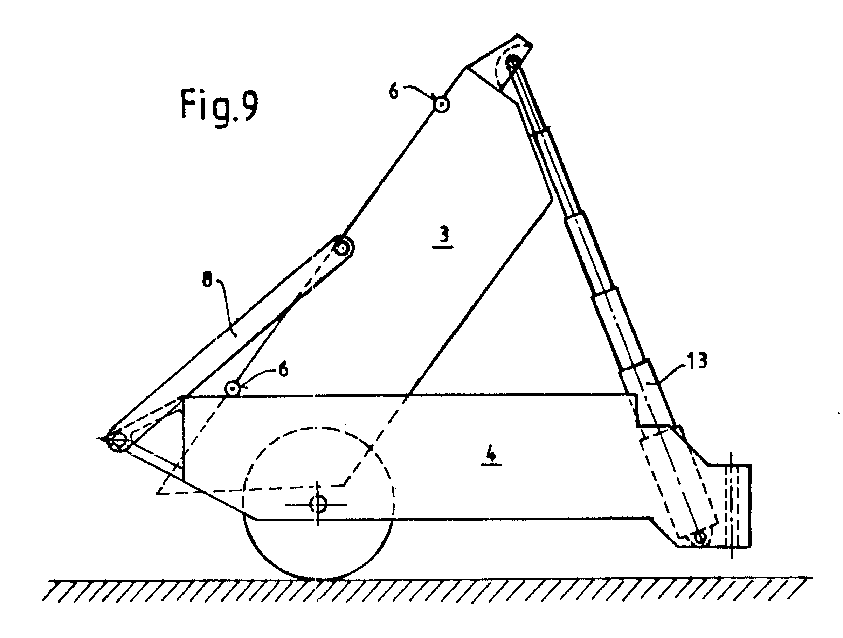

Zum Entleeren kann die Mulde (3) nach Figur 9 gekippt werden. Zu diesem Zweck wird die Rolle (6) arretiert, so daß sie als Drehpol fungiert. Mit dem Hubzylinder (13), welcher drehbar an den Rahmen (4) angelenkt ist, kann die Mulde (3) gekippt werden. Alternativ zum Hubzylinder (13) kann vorgesehen werden, die Hubarme (8) zum Kippen heranzuziehen. Die Betätigung der Hubarme (8) kann über die Bordhydraulik durch einen Hydraulikmotor etc. erfolgen.

## Ansprüche

1. Verfahren zum Wechsel von Mulden bei Wechselmuldenkippern, bei dem eine leere Mulde unter Zuhilfenahme von Hubarmen von einem Rahmen eines Transportfahrzeuges abgesetzt wird, gekennzeichnet durch nachfolgende Verfahrensschritte :

a) die leere Mulde (2) wird am Ort eines Wechselvorganges von einem Rahmen (4) des Transportfahrzeuges (1) zunächst abgehoben und in ihrer obersten Stellung arretiert

b) während die leere Mulde (2) in der obersten Stellung arretiert ist, wird eine volle Mulde (3) auf den Rahmen (4) des Transportfahrzeuges (1) gezogen und in Transportstellung gebracht

c) die leere Mulde (2) wird aus ihrer obersten Stellung abgesetzt und anstelle der vollen Mulde (3) abgesetzt.

2. Vorrichtung zur Durchführung des Verfahrens nach Anspruch 1, dadurch gekennzeichnet, daß das Transportfahrzeug (1) einen u-förmigen Rahmen (4) aufweist, der die Mulde (2) für das Transportgut aufnimmt, daß in beiden Wangen (10) des Rahmens (4) je ein Hubarm (8) schwenkbar gelagert ist, wobei die Schwenkbewegung durch je eine hydraulische Antriebseinrichtung bewerkstelligt wird, welche zwischen Rahmen und Hubarm angeordnet ist und zum Aufziehen der vollen Mulde (3) eine Zugvorrichtung vorgesehen ist, welche durch einen Hydraulikmotor betätigbar ist, und zwischen Rahmen (4) und Mulde (2) eine Kippvorrichtung vorgesehen ist, daß die Wangen (10) des Rahmens (4) eine schräge Anlauffläche (20) aufweisen und die Oberseite des Rahmens (4) zugleich als Lauffläche (5a) ausgebildet ist oder eine an anderer Stelle des Rahmens befindliche Lauffläche diese Funktion übernimmt, und daß jede Mulde (2) im Bereich eines oberen Randes Mittel zum Tragen und Führen auf dem Rahmen (4) aufweist.

3. Vorrichtung nach Anspruch 2, dadurch gekennzeichnet, daß das Mittel zum Tragen und Führen aus mindestens vier Rollen (6) besteht, welche in Achsen (7) gelagert sind, die fest mit dem oberen Rand der Mulde (2) verbunden sind.

4. Vorrichtung nach Anspruch 2, dadurch gekennzeichnet, daß das Mittel zum Tragen und Führen aus mindestens vier Gleitstücken besteht, welche fest mit dem oberen Rand der Mulde verbunden sind.

5. Vorrichtung nach Anspruch 2, dadurch gekennzeichnet, daß der Rahmen (4) des Transportfahrzeuges (1) an einem Ende in seiner Mittellängsebene ein Knickgelenk (5) aufweist, über welches er mit einem Antriebsteil verbunden ist.

6. Vorrichtung nach Anspruch 2, dadurch gekennzeichnet, daß die Kippvorrichtung aus einem mehrteiligen hydrauischen Hubzylinder (13) besteht, dessen Zylinder gelenkig mit dem Rahmen (4) verbunden ist und dessen Kolben (14) in eine über das Ende der Mulde (2) hinausragende Nase (16) eingreift, wobei die der Nase (16) gegenüberliegenden Rollen während des Kippvorganges gegenüber dem Rahmen (4) arretiert sind.

7. Vorrichtung nach Anspruch 6, dadurch gekennzeichnet, daß der Hubzylinder (13) mit einem Hilfsrahmen verbunden ist, der die Mulde (2) einseitig anhebt.

## Claims

1. Method for changing dump bodies in interchangeable dump trucks, in which an empty dump body is lowered form a frame of a truck with the aid of lifting arms, characterized by the following steps :

a) the empty dump body (2) is first lifted from a frame (4) of the truck (1) at the site of a changeover process and locked in its uppermost position,

b) while the empty dump body (2) is locked in the uppermost position, a full dump body (3) is pulled onto the frame (4) of the truck (1) and brought into the transport position,

c) the empty dump body (2) is lowered from its uppermost position and lowered in place of the full dump body (3).

2. Apparatus for carrying out the method according to claim 1, characterised in that the truck (1) comprises a U-shaped frame (4) which receives the dump body (2) for the goods to be transported, that a lifting arm (8) is mounted pivotably in each of the two side panels (10) of the frame (4), wherein the pivot movement is accomplished in each case by a hydraulic drive mechanism which is disposed between frame and lifting arm and a pull device which can be operated by a hydraulic motor is provided for pulling up the full dump body (3), and between frame (4) and dump body (2) is provided a tilting device, that the side panels (10) of the frame (4) comprise an inclined contact surface (20) and the upper side of the frame (4) is simultaneously constructed as a running surface (5a) or a running surface located at another point of the frame assumes this function, and that each dump body (2) in the region of the upper edge comprises means for carrying and guiding on the frame (4).

3. Apparatus according to claim 2, characterised in that the means for carrying and guiding consists of at least four rollers (6) which are mounted in shafts (7) which are rigidly connected to the upper edge of the dump body (2).

4. Apparatus according to claim 2, characterised in that the means for carrying and guiding consists of at least four slide blocks which are rigidly connected to the upper edge of the dump body.

5. Apparatus according to claim 2, characterised in that the frame (4) of the truck (1) comprises at one end in its longitudinal centre plane a hinge joint (5) by which it is connected to a drive component.

6. Apparatus according to claim 2, characterised in that the tilting device consists of a multi-part hydraulic lifting cylinder (13), of which the cylinder is pivotably connected to the frame (4) and of which the piston (14) engages in a lug (16) projecting beyond the end of the dump body (2), wherein the rollers opposite the lug (16) are locked relative to the frame (4) during the tilting process.

7. Apparatus according to claim 6, characterised in that the lifting cylinder (13) is connected to an auxiliary frame which lifts the dump body (2) on one side.

## Revendications

1. Procédé de changement de bennes de véhicules à bennes interchangeables, procédé selon lequel on dépose une benne vide en utilisant les bras de levage du châssis d'un véhicule de transport, procédé caractérisé en ce que :

a) on soulève la benne vide (2) à l'emplacement où doit se produire le changement, par rapport au châssis (4) du véhicule de transport (1) et on bloque cette benne dans sa position haute,

b) pendant que la benne vide (2) est bloquée dans sa position haute, on tire une benne pleine (3) sur le châssis (4) du véhicule de transport (1) et on met cette benne en position de transport,

c) on dépose la benne vide (2) à partir de sa position haute à la place de la benne pleine (3).

2. Dispositif pour la mise en oeuvre du procédé selon la revendication 1, caractérisé en ce que le véhicule de transport (1) comporte un châssis (4) en forme de U qui reçoit la benne (2) pour le produit à transporter, et un bras de levage (8) est articulé sur chacun des flasques (10) du châssis (4), le mouvement de basculement étant assuré par un dispositif d'entraînement hydraulique prévu entre le châssis et le bras de levage et la traction de la benne pleine (3) est assurée par un dispositif de traction actionné par un moteur hydraulique, un dispositif de basculement étant prévu entre le châssis (4) et la benne (2) et les flasques (10) du châssis (4) comportent une rampe (20), la surface supérieure du châssis (4) formant en même temps la surface de roulement (5a) ou une surface de roulement prévue à un autre emplacement du châssis assure cette fonction et chaque benne (2) comporte au niveau de son bord supérieur, des moyens pour être portée et guidée sur le châssis (4).

3. Dispositif selon la revendication 2, caractérisé en ce que le moyen pour porter et guider se comporte d'au moins quatre galets (6) montés sur des axes (7) solidaires du bord supérieur de la benne (2).

4. Dispositif selon la revendication 2, caractérisé en ce que les moyens pour porter et guider se composent d'au moins quatre patins solidaires du bord supérieur de la benne.

5. Dispositif selon la revendication 2, caractérisé en ce que le châssis (4) du véhicule de transport (1) comporte à une extrémité une articulation (5) située dans son plan médian et par laquelle le châssis est relié à un tracteur.

6. Dispositif selon la revendication 2, caractérisé en ce que le dispositif de basculement se compose d'un vérin de levage (13) hydraulique, en plusieurs parties, dont le cylindre est articulé au châssis (4) et dont le piston (14) agit sur un bec (16) qui déborde de l'extrémité de la benne (2), les galets opposés au bec (16) étant bloqués par rapport au châssis (4) pendant l'opération de basculement.

7. Dispositif selon la revendication 6, caractérisé en ce que le vérin de levage (13) est relié à un châssis auxiliaire qui soulève d'un côté la benne (2).

Fig.1

Fig.2

Fig.3

Fig.4

Fig.5

Fig.6

# Fig. 8

# Fig. 7

EP 0 308 615 B1

Fig.9

EP 0 308 615 B1